(19) Europäisches Patentamt
European Patent Office
Office européen des brevets

(11) EP 4 769 540 A1

(12) EUROPEAN PATENT APPLICATION
published in accordance with Art. 153(4) EPC

(43) Date of publication:
01.07.2026 Bulletin 2026/27

(21) Application number: 23952117.2

(22) Date of filing: 21.12.2023

(51) International Patent Classification (IPC):
H01M 4/36 (2006.01)  H01M 4/505 (2010.01)
H01M 4/525 (2010.01)  H01M 10/30 (2006.01)

(52) Cooperative Patent Classification (CPC):
Y02E 60/10

(86) International application number:
PCT/CN2023/140490

(87) International publication number:
WO 2025/055195 (20.03.2025 Gazette 2025/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 15.09.2023 CN 202311196126

(71) Applicant: Sunwoda Mobility Energy Technology
Co., Ltd.
Shenzhen, Guangdong 518107 (CN)

(72) Inventors:
• HE, Libo
  Guangdong 518107 (CN)
• CHEN, Fuzhou
  Guangdong 518107 (CN)

(74) Representative: Elzaburu S.L.P.
Edificio Torre de Cristal
Paseo de la Castellana 259 C, planta 28
28046 Madrid (ES)

(54) **POSITIVE ELECTRODE ACTIVE MATERIAL, SECONDARY BATTERY, AND ELECTRICAL DEVICE**

(57) A positive electrode active material, a secondary battery, and an electric device. The positive electrode active material includes a secondary particle agglomerated by primary particles. In the SEM image of cross-section of the secondary particle, the number of grain boundaries per unit cross-sectional area is $\alpha$ line/$\mu m^2$, the length of grain boundaries per unit cross-sectional area is $\beta$ $\mu m/\mu m^2$, and the secondary particle satisfies: $0.15 \leq \beta/\alpha \leq 0.4$. By adjusting the number of grain boundaries and length of grain boundaries, the stress release ability of material structure is enhanced, the oxygen stability of material is improved, and the cycle life of secondary battery is further extended and the performance of gas production and kinetic properties are improved.

FIG. 1

EP 4 769 540 A1

**Description**

The present application claims priority to Chinese Patent Application No. 202311196126.6, filed with the China National Intellectual Property Administration on September 15, 2023, and entitled with "POSITIVE ELECTRODE ACTIVE MATERIAL, SECONDARY BATTERY, AND ELECTRIC DEVICE", which is hereby incorporated by reference in its entirety.

**TECHNICAL FIELD**

The embodiments of the present application relate to, but are not limited to, the field of battery technology, and in particular, to a positive electrode active material, a secondary battery, and an electric device.

**BACKGROUND**

Polycrystalline ternary materials have been widely used in high-power and high-nickel batteries due to their higher initial coulombic efficiency and better power performance. However, polycrystalline ternary materials suffer from degradation of the performance of cycling and gas production due to particle cracking and lattice oxygen losing, which severely limits the power performance of battery and narrows the application scope of battery.

**SUMMARY**

**Technical Problem**

The present application provides a positive electrode active material, secondary battery, and electric device to address the issue of cracking and oxygen loss of high-nickel polycrystalline particles.

**Technical Solution**

The following provides an overview of the subject matter described in detail herein. This overview is not intended to limit the scope of protection of the claims.

In the first aspect, the present application provides a positive electrode active material comprising a secondary particle agglomerated by a primary particle, where in an SEM image of a cross-section of the secondary particle, the number of grain boundaries per unit cross-sectional area is $\alpha$ per $\mu m^2$, the length of grain boundaries per unit cross-sectional area is $\beta$ $\mu m/\mu m^2$, and the secondary particle satisfies:

$$0.15 \leq \beta/\alpha \leq 0.4.$$

Optionally, the secondary particle has pores, where in the SEM image of cross-section of the secondary particle, the number of pores per unit cross-sectional area is $\gamma$ per $\mu m^2$, and the secondary particle satisfies: $\gamma \leq 30$.

Optionally, in the SEM image of cross-section of the secondary particle, the cross-sectional pattern of the primary particle has a longest edge and a side edge that is not intersected with the longest edge; where the sum of lengths of the longest edge and the side edge per unit cross-sectional area is R $\mu m/\mu m^2$, satisfying: $R/\beta \geq 60\%$.

Optionally, the positive electrode active material further satisfies that: the oil absorption value ranges from 1 mL/g to 80 mL/g.

Optionally, the positive electrode active material further satisfies that: the Dv10 of the positive electrode active material is from 1 $\mu m$ to 13 $\mu m$, the Dv50 of the positive electrode active material is from 2 $\mu m$ to 16 $\mu m$, and the Dv90 of the positive electrode active material is from 3 $\mu m$ to 20 $\mu m$; where Dv10 refers to a particle size corresponding to the cumulative volume percentage of the positive electrode active material reaching 10%; Dv50 refers to a particle size corresponding to the cumulative volume percentage of the positive electrode active material reaching 50%; Dv90 refers to a particle size corresponding to the cumulative volume percentage of the positive electrode active material reaching 90%.

Optionally, the positive electrode active material further satisfies that: the specific surface area of the positive electrode active material is from 0.2 $m^2/g$ to 2.5 $m^2/g$.

Optionally, the secondary particle further satisfies at least one of the following features:

$$d) \ 1 \leq \alpha \leq 50;$$

or

$$e) \ 0.15 \le \beta \le 20.$$

Optionally, the positive electrode active material includes $Li_\theta(Ni_aCo_bMn_c)_{1-x}M_xO_yG_z$; where $0.95 \le \theta \le 1.1$, $0.3 \le a \le 0.9$, $0 \le b \le 0.15$, $0 \le c \le 0.5$, $0 \le x \le 0.1$, $1 \le y \le 2$, $0 \le z \le 1$, $y + z = 2$; M is selected from at least one of Al, Mg, B, Ca, Zn, Sb, W, Bi, Cr, Sr, Y, W, Zr, Ti, La, Nb, Mo, or V; G is selected from at least one of F, S, Cl, or N.

Optionally, the positive electrode active material includes a coating element, which is disposed on the surface of the secondary particle and/or the primary particle;

the coating element is selected from at least one of Al, Mg, B, Ba, Co, Si, Sn, P, Ca, Zn, Sb, W, Bi, Cr, Sr, Y, W, Zr, Ti, La, Nb, or Mo;
the total content of the coating element per unit surface area in the positive electrode active material is from 0.1 mg/m$^2$ to 20 mg/m$^2$.

Optionally, the content of residual lithium per unit surface area in the positive electrode active material is from 0.1 mg/m$^2$ to 8 mg/m$^2$.

In the second aspect, the present application also provides a secondary battery including a positive electrode current collector and a positive electrode plate disposed on the positive electrode current collector, where the positive electrode plate includes the positive electrode active material.

In the third aspect, the present application further provides an electric device including the secondary battery.

**Advantageous Effects**

Compared to the existing technologies, the positive electrode active material of the present application includes a secondary particle agglomerated by primary particles. In the SEM image of cross-section of the secondary particle, the number of grain boundaries per unit cross-sectional area is $\alpha$ line/$\mu$m$^2$, the length of grain boundaries per unit cross-sectional area is $\beta$ $\mu$m/$\mu$m$^2$, and the secondary particle satisfies: $0.15 \le \beta/\alpha \le 0.4$. By adjusting the number of grain boundaries, orientation of crystal plane and pore structure of cross-section, the present application increases the stress release ability of material structure, improves oxygen stability of material, further extends the cycle life of secondary battery and improves the performance of gas production and kinetic properties.

It could be understood that the secondary batteries and electric devices provided in the embodiments of the present application possess all the technical features and advantageous effects of the positive electrode active material aforementioned, which are not repeated here.

**BRIEF DESCRIPTION OF DRAWINGS**

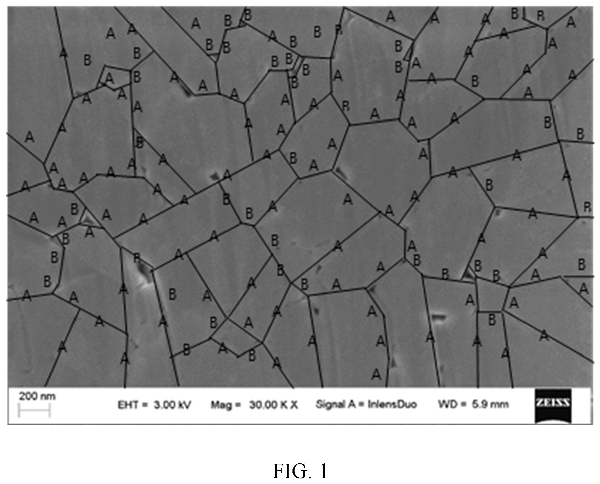

FIG. 1 is an SEM image of a cross-section of a positive electrode active material prepared in Example 1 of the present application.

**DESCRIPTION OF EMBODIMENTS**

The technical solutions in the embodiments of the present application are clearly and completely described in detail below with reference to the accompanying drawings in the embodiments of the present application. The embodiments described are merely some embodiments of the present application, rather than all embodiments. All other embodiments obtained by those skilled in the art based on the embodiments of the present application without creative labor shall fall within the scope of protection of the present application.

The following disclosure provides numerous different embodiments or examples for implementing various structures of the present application. To simplify the disclosure of the present application, components and configurations of specific examples are described below. These are merely illustrative and are not intended to limit the scope of the present application.

Compared to monocrystalline ternary materials, polycrystalline ternary materials exhibit higher first-cycle efficiency and superior power performance. Particle cracking and lattice oxygen loss are the primary causes of deteriorated cycling performance and gas production performance in secondary batteries using polycrystalline materials. The core points to solve the problem of particle cracking and lattice oxygen loss in polycrystalline ternary materials is how to mitigate or even preventing particle cracking in polycrystals occurring after high compaction and long-term cycling, and how to reduce lattice oxygen loss.

Therefore, based on the aforementioned problem, the present application provides a positive electrode active material, a secondary battery, and an electric device.

A positive electrode active material includes a secondary particle agglomerated by primary particles, where, in an SEM image of cross-section of the secondary particle, the number of grain boundaries per unit cross-sectional area is $\alpha$ line per $\mu m^2$, the length of grain boundaries per unit cross-sectional area is $\beta$ $\mu m/\mu m^2$, and the secondary particle satisfies: $0.15 \leq \beta/\alpha \leq 0.4$.

It could be understood that the number of grain boundaries per unit cross-sectional area $\alpha$ refers to the quantity of grain boundaries contained within a unit area of the material. The grain boundary is the interface between adjacent crystal grains. The number of grain boundaries per unit cross-sectional area can be obtained by selecting multiple regions in the SEM image and calculating the ratio of the total number of grain boundaries to the total area across these multiple regions. When counting the total number of grain boundaries in a region, if the edge of selected region contains an incomplete grain boundary, the incomplete grain boundary shall also be counted as one grain boundary. The length of grain boundaries per unit cross-sectional area $\beta$ refers to the total length of grain boundaries within a region of unit area in the material. The physical meaning of $\beta/\alpha$ refers to the length per unit grain boundary, which can reflect the stability of material. Numerous defects at grain boundaries lead to violent side reactions between the material and the electrolyte; and controlling the number and length of grain boundaries to an appropriate level can ensure that the electrolyte can effectively wet primary particles while reducing side reactions between the surface of positive electrode active material and the electrolyte at grain boundaries, thereby improving cycling performance, gas production, and rate capability.

In some embodiments, the secondary particle satisfies: $1 \leq \alpha \leq 50$; for example, $\alpha$ may be any one of 1, 2, 5, 8, 10, 15, 20, 25, 30, 35, 40, 45, and 50, or a range formed by any two thereof.

When $\alpha$ is within the above range, it ensures that the electrolyte can effectively wet primary particles while reducing side reactions between the surface of positive electrode active material and the electrolyte at grain boundaries, thereby improves cycling performance, gas production, and rate capability.

In some embodiments, the secondary particle satisfies: $0.15 \leq \beta \leq 20$; for example, $\beta$ may be any one of 0.15, 0.35, 0.75, 1, 2, 5, 8, 10, 15, and 20, or a range formed by any two thereof.

When $\beta$ is within the above range, it can further effectively enhance the stability of the material's oxygen, reduce lattice oxygen loss, and further improve cycling and gas production performance.

In some embodiments, the secondary particle has pores formed by stacking primary particles. In the SEM image of cross section of the secondary particle, the number of pores per unit cross-sectional area is $\gamma$ per $\mu m^2$, and the secondary particle satisfies: $\gamma \leq 30$. For example, $\gamma$ may be any one of 0.3, 0.5, 0.8, 1.0, 0.5, 2.0, 3.0, 5.0, 6.0, 8.0, 10.0, 12.0, 15.0, 18.0, 20.0, 22.0, 25.0, 28.0, and 30.0, or a range formed by any two thereof. The number of pores per unit cross-sectional area can be obtained by selecting multiple regions in the SEM image and calculating the ratio of the total number of pores to the total area across selected multiple regions. When counting the number of pores, if the edges of selected regions include non-complete pores such as half-pores, they are also counted as complete pores.

In some embodiments, the secondary particle has pores, which have a pore diameter of D $\mu m$, satisfying: $0.01 \leq D \leq 4$; for example, D may be any one of 0.01, 0.1, 1, 2, 3, and 4 $\mu m$, or a range formed by any two thereof. Optionally, D $\mu m$ may range from 0.01 $\mu m$ to 0.2 $\mu m$, or from 0.05 $\mu m$ to 0.1 $\mu m$.

It could be understood that the number $\gamma$ and the pore diameter D of pores per unit cross-sectional area are appropriately set, which can maximize the release of stress accumulated after high compaction and long-term cycling, mitigate particle cracking, and improve cycling and gas production performance; at same time, an appropriate number of pores in the cross-section can enhance electrolyte wetting of the particles, improving rate capability.

In some embodiments, in the SEM image of cross-section of the secondary particle, the cross-sectional pattern of the primary particles has a longest edge and a side edge that is not intersected with the longest edge; where the sum of lengths of the longest edge and the side edge per unit cross-sectional area is R $\mu m/\mu m^2$, satisfying: $R/\beta \geq 60\%$. By controlling orientation of crystal plane, 60% or more of the total length of grain boundaries is contributed by the side edges of the cross-sectional pattern of the primary particles, which can effectively enhance the stability of the material's oxygen and reduce lattice oxygen loss, thereby improving the cycling and gas production performance. In some embodiments, $R/\beta \leq 90\%$, for example, the value of $R/\beta$ may be any one of 60%, 65%, 73%, 78%, 80%, 83%, 86%, 88%, and 90%, or a range formed by any two thereof.

It should be understood that the side edges of the cross-sectional pattern actually correspond to the surfaces of the primary particles. Taking a long-strip-shaped polygonal primary particle as an example, the longest face and a face not intersecting with the longest face are the side faces, which are (003) planes; and the remaining faces are front faces, which are (102) planes. Accordingly, the side faces correspond to the aforementioned edges in the cross-sectional pattern of a primary particle. Since the oxygen vacancy formation energy of the (003) plane is greater than that of the (102) plane, the side faces exhibit higher stability of oxygen and are less prone to oxygen loss. Therefore, only when the condition $R/\beta \geq 60\%$ is satisfied can the oxygen stability of the material be further enhanced, thereby reducing lattice oxygen loss.

In some embodiments, the oil absorption value of the positive electrode active material ranges from 1 mL/g to 80 mL/g; for example, the oil absorption value may be any one of 1 mL/g, 2 mL/g, 3 mL/g, 5 mL/g, 8 mL/g, 10 mL/g, 15 mL/g, 20 mL/g, 25 mL/g, 30 mL/g, 35 mL/g, 40 mL/g, 45 mL/g, 50 mL/g, 55 mL/g, 60 mL/g, 65 mL/g, 70 mL/g, 75 mL/g, and 80 mL/g, or a range formed by any two thereof. The oil absorption value depends on factors such as the effective internal and external surface area of material, the number of pores in cross section and the size of pores in cross section, which can reflect the situation of electrolyte wetting of the material. When the oil absorption value falls within the above range, it can make the material have good wettability and rate capability while effectively reducing the degree of particle cracking, thereby ensuring the material's long-term cycling and reducing gas production.

In some embodiments, the Dv10 of the positive electrode active material ranges from 1 $\mu$m to 13 $\mu$m, the Dv50 of the positive electrode active material ranges from 2 $\mu$m to 16 $\mu$m, and the Dv90 of the positive electrode active material ranges from 3 $\mu$m to 20 $\mu$m; where, Dv10 refers to a particle size corresponding to the cumulative volume percentage of the positive electrode active material reaching 10%; Dv50 refers to a particle size corresponding to the cumulative volume percentage of the positive electrode active material reaching 50%; Dv90 refers to a particle size corresponding to the cumulative volume percentage of the positive electrode active material reaching 90%. It could be understood that an appropriate range of particle size ensures appropriate specific surface area of the positive electrode active material and appropriate distance of lithium ion transport, thereby effectively improving the cycling performance and rate capability of the material.

In some embodiments, when the Dv10 value falls within the aforementioned range, it can further improve the distribution of positive electrode active material particles in the positive electrode active material layer, thereby further improving the overall performance of the secondary battery.

In some embodiments, when the value of Dv50 or Dv90 falls within the aforementioned range, it can control the proportion of large particles in the positive electrode active particles. This enables the distribution of the positive electrode active particles in the positive electrode active material layer to be in a better state, thereby improving the overall performance of the secondary battery.

In some embodiments, the specific surface area of the positive electrode active material ranges from 0.2 m$^2$/g to 2.5 m$^2$/g. For example, the specific surface area of the positive electrode active material may be any one of 0.2 m$^2$/g, 0.5 m$^2$/g, 0.8 m$^2$/g, 1.0 m$^2$/g, 1.5 m$^2$/g, 2.0 m$^2$/g, and 2.5 m$^2$/g, or a range formed by any two thereof. It can be understood that an appropriate range of specific surface area can facilitate sufficient contact between the electrolyte and the positive electrode active material, reduce side reactions at interfaces, and improve cycling and gas production performance; meanwhile it can reduce the usage of conductive agents and binders, lower battery costs, and enhance battery energy density.

In some embodiments, the number of grain boundaries per unit cross-sectional area $\alpha$ can be calculated by the following formula:

$$\alpha = N_0 / (L_0/P_0 \times W_0/P_0);$$

where, $N_0$ represents the number of boundaries between primary particles in the SEM image of cross-section of the secondary particle, with the unit being line; $L_0$ represents the actual measured length of the SEM image of cross-section of the secondary particle, with the unit being $\mu$m; $W_0$ represents the actual measured width of the SEM image of cross-section of the secondary particle, with the unit being $\mu$m; $P_0$ represents the ratio of the actual measured length of the scale bar segment to the indicated length of the scale bar segment in the SEM image of cross-section of the secondary particle, with the unit being $\mu$m/nm.

In some embodiments, the length of grain boundaries per unit cross-sectional area $\beta$ can be calculated by the following formula:

$$\beta = S_0 / (L_0/P_0 \times W_0/P_0);$$

where, $S_0$ represents the total length of boundaries between primary particles in the SEM image of cross-section of the secondary particle, with the unit being $\mu$m; $L_0$ represents the actual measured length of the SEM image of cross-section of the secondary particle, with the unit being $\mu$m; $W_0$ represents the actual measured width of the SEM image of cross-section of the secondary particle, with the unit being $\mu$m; $P_0$ represents the ratio of the actual measured length of the scale bar segment to the indicated length of the scale bar segment in the SEM image of cross-section of the secondary particle, with the unit being $\mu$m/nm.

In some embodiments, the number of pores per unit cross-sectional area $\gamma$ can be calculated by the following formula:

$$\gamma = H_0 / (L_0/P_0 \times W_0/P_0);$$

where, $H_0$ represents the total number of pores having a pore diameter greater than 10 nm in the SEM image of cross-section of the secondary particle, with the unit being piece; $L_0$ represents the actual measured length of the SEM image of cross-section of the secondary particle, with the unit being $\mu$m; $W_0$ represents the actual measured width of the SEM image of cross-section of the secondary particle, with the unit being $\mu m$; $P_0$ represents the ratio of the actual measured length of the scale bar segment to the indicated length of the scale bar segment in the SEM image of cross-section of the secondary particle, with the unit being $\mu m/nm$.

Taking FIG. 1 as an example, after ion milling of the positive electrode active material, the particle cross-section is examined via SEM. Any single secondary particle with a particle size of Dv50 $\pm$ 10% is selected, and an SEM image of this particle at 30K magnification is obtained, in which the SEM image only includes the cross-section of this particle. In FIG. 1, A represents the side face of a primary particle, and B represents the front face of the primary particle. Where, for polygonal primary particles, the longest face and any face not intersecting with the longest face belong to the side faces and the remaining faces are front faces. If one face belongs to both the side face of one primary particle and the front face of another primary particle, it is counted as a side face.

In some embodiments, $N_0$ can be directly determined from the intersection point in FIG. 1; $S_0$ can be directly determined from the total length of the boundary segments in FIG. 1; $H_0$ can be directly determined from the pores in FIG. 1, which is the total number of pores; $L_0$ and $W_0$ respectively represent the sizes of actual measured length and width in FIG. 1; $P_0$ can be understood as the proportional relationship between the value represented by the scale bar segment in FIG. 1 and the actual size of the scale bar segment measured by a ruler, which is used to convert the size of the corresponding secondary particle. Taking FIG. 1 as an example, $P_0$ represents the actual measured length corresponding to a 200 nm scale bar.

In some embodiments, the positive electrode active material includes $Li_\theta(Ni_aCo_bMn_c)_{1-x}M_xO_yG_z$; where $0.95 \leq \theta \leq 1.1, 0.3 \leq a \leq 0.9, 0 \leq b \leq 0.15, 0 \leq c \leq 0.5, 0 \leq x \leq 0.1, 1 \leq y \leq 2, 0 \leq z \leq 1$, and $y + z = 2$; M is selected from at least one of Al, Mg, B, Ca, Zn, Sb, W, Bi, Cr, Sr, Y, W, Zr, Ti, La, Nb, Mo, or V; G is selected from at least one of F, S, Cl, or N.

The positive electrode active material further includes a coating element, which disposed on the surface of the secondary particle and/or the primary particle; the coating element is selected from at least one of Al, Mg, B, Ba, Co, Si, Sn, P, Ca, Zn, Sb, W, Bi, Cr, Sr, Y, W, Zr, Ti, La, Nb, or Mo; the total content of coating element per unit surface area in the positive electrode active material is 0.1 $mg/m^2$ to 20 $mg/m^2$, where the total content of coating element per unit surface area = the total mass of coating element per unit mass of positive electrode active material / the specific surface area of the positive electrode active material.

It could be understood that the total content of coating element per unit particle surface area can more accurately reflect the content of coating substance on the particle surface. An appropriate coating content effectively reduces side reactions between the material and the electrolyte interface, improving cycling and gas production performance. Furthermore, when the total content of coating element per unit particle surface area falls within the aforementioned range, it can enhance the transport rate of lithium ions on the surface of the positive electrode active material, facilitating the kinetics performance of battery.

In some embodiments, the content of residual lithium per unit surface area in the positive electrode active material ranges from 0.1 $mg/m^2$ to 8 $mg/m^2$, where, the content of residual lithium per unit surface area = the content of residual lithium per unit mass of positive electrode active material / the specific surface area of the positive electrode active material.

It could be understood that the total content of residual lithium per unit particle surface area can more accurately reflect the content of residual lithium on the particle surface. An appropriate content of residual lithium can effectively improve long-term cycling and gas production performance. A small amount of residual lithium facilitates the formation of the positive electrode CEI film, enhancing cycling performance and gas production property; excessive amount of residual lithium will affect ion and electron transport on the surface of positive electrode active material and accelerate decomposition of HF in the electrolyte, causing decline of long-term cycling and increase of the gas production rate.

In some embodiments, the preparation method for the aforementioned positive electrode active material includes the following steps: (1) after a metal salt solution is prepared with nickel, cobalt and manganese sulfates in certain proportions, the metal salt solution, complexing agent solution, and sodium hydroxide solution are simultaneously dripped into a reactor for performing a coprecipitation reaction by controlling parameters. After the reaction is completed, the nickel-cobalt-manganese precursor is obtained by aging, filtering, washing, and drying. (2) The nickel-cobalt-manganese precursor, lithium source, M source, and N source are added into a blending device in certain proportions; and after uniform mixing, the resulting mixture is placed in an atmosphere furnace for sintering to obtain a ternary material having a doping element. (3) The product from the first sintering and the coating source are placed into a blending device, and after uniform mixing, the mixture is then placed in an atmosphere furnace and subjected to a second sintering to obtain a ternary material with a coating layer.

In some embodiments, the complexing agent solution is one or more of ammonia water, ammonium bicarbonate, ammonium dihydrogen phosphate, and oxalic acid.

In some embodiments, the coprecipitation reaction is conducted at a temperature of 50-90°C, a pH of 7 to 12, a reaction time of 24 to 200 h, and an aging time of 12 to 48 h. By controlling the parameters of coprecipitation reaction, the formation rate of the precursor crystal nuclei is significantly larger than the crystal growth rate, thereby preparing a precursor with elongated whisker.

In some embodiments, the lithium source is a lithium-containing compound, specifically, one or more of lithium hydroxide, lithium carbonate, lithium phosphate, or lithium oxide. The M source is carbonate, oxide, nitrate, phosphate, chloride, or hydroxide, containing one or more elements of Al, Mg, B, Ca, Zn, Sb, W, Bi, Cr, Sr, Y, W, Zr, Ti, La, Nb, Mo, or V. The G source is a compound containing one or more elements of F, S, Cl, and N, such as lithium fluoride, calcium chloride, sodium sulfide, or lithium nitride.

It could be understood that by addition of specific dopant element and regulation of the sintering process, the (003) plane of the ternary material is induced to grow preferentially. The primary particles of precursor with elongated whisker further grow into an elongated shape, with the side face accounting for a large proportion, thereby enhancing the stability of material and reducing lattice oxygen loss.

In some embodiments, the coating source is carbonate, oxide, nitrate, phosphate, chloride, or hydroxide containing one or more elements of Al, Mg, B, Ba, Co, Si, Sn, P, Ca, Zn, Sb, W, Bi, Cr, Sr, Y, W, Zr, Ti, La, Nb, and Mo.

In some embodiments, the first sintering temperature ranges from 400°C to 1000°C, the sintering time ranges from 12 h to 48 h, and the oxygen concentration is ≥10%; the second sintering temperature ranges from 100°C to 700°C, and the sintering time ranges from 12 h to 24 h.

In some embodiments, the present application further provides a secondary battery including a positive electrode current collector and a positive electrode plate disposed on the positive electrode current collector, where the positive electrode plate includes the aforementioned positive electrode active material.

In some embodiments, the positive electrode plate includes positive electrode active material layer, which may be a single layer or multiple layers. Each layer of the multi-layer positive electrode active material may contain the aforementioned positive electrode active material. The positive electrode active material is any substance capable of reversibly intercalating and deintercalating metal ions such as lithium ions.

In some embodiments, the positive electrode plate is a single-sided electrode plate or a double-sided electrode plate. When the positive electrode plate is a single-sided electrode plate, the positive electrode active material layer is disposed on one surface of the positive electrode current collector. When the positive electrode plate is a double-sided electrode plate, the positive electrode active material layer is disposed on both surfaces of the positive electrode current collector. Both single-sided and double-sided positive electrode plate regions may also coexist on the positive electrode plate.

In some embodiments, the preparation method for the positive electrode active material may include: high-temperature solid-state synthesis, carbothermic reduction, spray drying, template method, or hydrothermal synthesis.

In some embodiments, intermediate products obtained during the preparation of the positive electrode active material may also be crushed and sieved to obtain a positive electrode active material with optimized distribution of particle size and specific surface area. There are no particular restrictions on the crushing manner, which may be selected based on actual requirements, for example, a particle crusher is used. The preparation method for the positive electrode active material in the present application is not limited to the above methods, provided that the resulting positive electrode active material has the features described herein.

Additionally, the positive electrode active material layer further includes a positive electrode conductive agent and a positive electrode binder. In some embodiments, the type of positive electrode conductive agent is not particularly limited and may employ any known conductive agent. Examples of the positive electrode conductive agents may include, but are not limited to, carbon materials such as natural graphite, artificial graphite, and amorphous carbon such as acetylene black and needle coke, etc., carbon nanotubes, grapheme, etc. The aforementioned positive electrode conductive agents may be used alone or in any combination.

In some embodiments, there is no particular limitation on the type of positive electrode binder used during manufacturing of the positive electrode active material layer. In the case of a coating method, it may be any material that is soluble or dispersible in the liquid medium used during manufacture of the electrode. Examples of positive electrode binders may include, but are not limited to, one or more of the following: resin-based polymers such as polyethylene, polypropylene, polyethylene terephthalate, polymethyl methacrylate, polyimide, aromatic polyamide, cellulose, and nitrocellulose; rubber-like polymers such as styrene-butadiene rubber (SBR), nitrile rubber (NBR), fluororubber, isoprene rubber, polybutadiene rubber, and ethylene-propylene rubber; thermoplastic elastomeric polymers, such as styrene-butadiene-styrene block copolymer or its hydrogenated derivative, ethylene-propylene-diene terpolymer (EPDM), styrene-ethylene-butadiene-ethylene copolymer, styrene-isoprene-styrene block copolymer or its hydrogenated derivative; soft resin-like polymers, such as syndiotactic-1,2-polybutadiene, polyvinyl acetate, ethylene-vinyl acetate copolymer, propylene-α-olefin copolymer; fluorinebased polymers, such as polyvinylidene fluoride (PVDF), polytetrafluoroethylene, fluorinated polyvinylidene fluoride, and polytetrafluoroethylene-ethylene copolymer; polymer compositions exhibiting ionic conductivity for alkali metal ions (particularly lithium ions), etc. The aforementioned positive electrode binders may be used alone or in any combination.

In some embodiments, there is no limitation on the type of solvent used to form the positive electrode slurry, as long as a solvent can dissolve or disperse the positive electrode active material, positive electrode conductive agent, and positive electrode binder. Examples of solvents for forming the positive electrode slurry may include any one of aqueous solvents and organic solvents. Examples of aqueous media may include, but are not limited to, water and mixed media of alcohol and water, etc. Examples of organic media may include, but are not limited to, aliphatic hydrocarbons such as hexane; aromatic hydrocarbons such as benzene, toluene, xylene, and methylnaphthalene; heterocyclic compounds such as quinoline and pyridine; ketones such as acetone, methyl ethyl ketone, and cyclohexanone; esters such as methyl acetate and methyl acrylate; amines such as diethylenetriamine and N,N-dimethylaminopropylamine; ethers such as diethyl ether, epoxypropane, and tetrahydrofuran (THF); amides such as N-methylpyrrolidone (NMP), dimethylformamide, and dimethylacetamide; non-protonic polar solvents such as hexamethyl phosphoramide and dimethyl sulfoxide.

There is no particular limitation on the type of positive electrode current collector, which may be any known material suitable for use as a positive electrode current collector. Examples of positive electrode current collectors include, but are not limited to: metal materials such as aluminum, stainless steel, nickel plating, titanium, tantalum; carbon materials such as carbon cloth, carbon paper; and composite materials formed from a polymer and a metal layer. In some embodiments, the positive electrode current collector is a metal material. In some embodiments, the positive electrode current collector is aluminum.

There is no particular limitation on the form of the positive electrode current collector. When the positive electrode current collector is a metal material, its form may include, but is not limited to, metal foil, metal cylinder, metal tape roll, metal plate, metal foil, metal plate mesh, stamped metal, foamed metal, etc. When the positive electrode current collector is a carbon material, its form may include, but is not limited to, carbon plate, carbon film, carbon cylinder, etc.

In some embodiments, the preparation process for the positive electrode plate may include steps of mixing, coating, drying, cold pressing, slitting, and cutting and so on. The preparation of the positive electrode sheet includes: dispersing the positive electrode active material, the positive electrode conductive agent, and the positive electrode binder into N-methylpyrrolidone (NMP) at a specific ratio, coating the resulting slurry onto an aluminum foil, and drying, then cold pressing and slitting, obtaining the positive electrode plate.

Negative electrode plate

The negative electrode plate includes a negative electrode current collector and a negative electrode active material layer disposed on at least one surface of the negative electrode current collector. The negative electrode active material layer contains a negative electrode active material, where the negative electrode active material includes graphite.

The negative electrode plate may be a single-sided plate or a double-sided plate. When the negative electrode plate is the single-sided sheet, the negative active material layer is disposed on one surface of the negative electrode current collector. When the negative electrode plate is a double-sided plate, the negative active material layer is disposed on both surfaces of the negative electrode current collector. A single-sided negative electrode plate region and a double-sided negative electrode plate region may also coexist on the negative electrode plate. When both single-sided and double-sided negative electrode plate regions exist on the negative electrode plate, the thickness of the negative electrode plate refers to the thickness of the double-sided negative electrode plate region.

Separator

To prevent short circuits, a separator is typically provided between the positive electrode plate and negative electrode plate. The type of separator is not particularly limited and may be selected based on practical requirements. The separator may be polypropylene membrane, polyethylene membrane, spandex membrane, aramid membrane, or multilayer composite membrane modified by coating.

Electrolyte

In some embodiments, the main components of the electrolyte include a lithium salt, an organic solvent, and an additive. The type and composition of lithium salt and organic solvent are not particularly limited and may be selected based on practical requirements, where the lithium salt may include lithium hexafluorophosphate, while the solvent may include ethylene carbonate, methyl ethyl carbonate, dimethyl carbonate, propyl propionate, and the like.

In some embodiments, the preparation of the secondary battery includes: stacking the positive electrode plate, the separator and the negative electrode plate in sequence, positioning the separator to be located between the positive and negative electrode plates for isolation, and then winding them into a bare core; placing the bare core into a battery housing, baking at 65-120°C to remove moisture, performing electrolyte injection and sealing, followed by standing, hot-cold pressing, formation, clamping, and capacity grading and other process, and obtaining the secondary battery.

In some embodiments, the present application provides an electric device including the aforementioned secondary battery. The electrochemical device may be used in, but is not limited to, backup power supplies, electric motors, electric vehicles, electric motorcycles, powerassisted bicycles, bicycles, electric tools, and large household storage batteries, etc.

The present application has conducted multiple experiments, and now the results of some of the experiments are provided as references to further detail the invention. The detailed description is provided below in conjunction with specific embodiments. It should be understood that these embodiments serve only to illustrate the application and are not intended to limit the scope of the present application.

Example 1

A nickel-cobalt-manganese ternary polycrystalline material is prepared according to the following steps:

(1) preparing 2 mol/L raw material solution from nickel sulfate, cobalt sulfate, and manganese sulfate in a 1:1:1 molar ratio; adding the raw material solution, 0.5 mol/L ammonia water and 2 mol/L sodium hydroxide solution together into a constant-stirring reactor dropwise; controlling the reaction temperature to 60°C and pH to 11, reacting for 72 h, and aging for 12 h; and finally filtering, washing, and drying, thereby obtaining a nickel-cobalt-manganese hydroxide precursor;
(2) placing the above nickel-cobalt-manganese precursor, Me source (niobium oxide, molybdenum oxide, and lithium fluoride in a 1:1:2 molar ratio) and lithium hydroxide into a blending device at a molar ratio of Li/TM (Ni+Co+Mn) = 1.05:1 for mixing uniformly, placing the resulting mixture in an atmosphere furnace with oxygen concentration of 10% and sintering at 900°C for 24 h; performing mechanical grinding, and obtaining a ternary material containing the elements of niobium, molybdenum, and fluorine;
(3) placing the product obtained from a first sintering and the coating material (zirconium oxide, tungsten oxide, and titanium hydroxide at a molar ratio of 1:1:1) in a blending device and mixing them uniformly, placing the resulting mixture into an atmosphere furnace and then sintering at 500°C for 12, obtaining a ternary polycrystalline positive electrode active material with a coating layer (the coating elements are Zr, W, and Ti).

Example 2

The preparation method in this example is essentially the same as that of Example 1, with the difference being that: the reaction temperature is controlled to 50°C and the reaction pH is 11.5; the reaction time is 60 h, and the aging time is 8 h; the primary sintering temperature is 850°C and the sintering time is 18 h; the Me source consists in tin oxide, chromium oxide, and lithium sulfide at a molar ratio of 1:1:3; the coating source consists in magnesium oxide and barium hydroxide at a molar ratio of 1:1.

Example 3

The preparation method in this example is essentially the same as that of Example 1, with the difference being that: the content of nickel, cobalt and manganese in the raw material solution is set to be 5:2:3; the reaction temperature is controlled to 70°C, the reaction pH is 10.5, the reaction time is 80 h, and the aging time is 15 h; the primary sintering temperature is 850°C, the sintering time is 24 h; the Me source consists in strontium oxide and yttrium chloride at a molar ratio of 1:2; the coating source consists in titanium oxide and bismuth carbonate at a molar ratio of 1:2.

Example 4

The preparation method in this example is essentially the same as that of Example 1, with the difference being that: the content of nickel, cobalt, and manganese in the raw material solution is set to be 5:2:3; the reaction temperature is controlled to 65°C, the reaction pH is 12, the reaction time is 64 h, and the aging time is 8 h; the primary sintering temperature is 850°C, the sintering time is 18 h; the Me source consists in lanthanum oxide and tungsten oxide at a molar ratio of 1:1.5; the coating source consists in tin oxide and chromium oxide at a molar ratio of 1:1.5.

Example 5

The preparation method in this example is essentially the same as that of Example 1, with the difference being that: the content of nickel, cobalt, and manganese in the raw material solution is set to be 6:2:2; the reaction temperature is controlled to 40°C, the reaction pH is 10, the reaction time is 80 h, and the aging time is 15 h; the primary sintering temperature is 800°C, the sintering time is 12 h, and the concentration of oxygen is 60%; the Me source consists in niobium hydroxide and molybdenum oxide in a molar ratio of 2:1; the coating source consists in strontium oxide and yttrium hydroxide in a molar ratio of 1:2.

Example 6

The preparation method in this example is essentially the same as that of Example 1, with the difference being that: the content of nickel, cobalt, and manganese in the raw material solution is set to be 6:2:2; the reaction temperature is controlled to 45°C, the reaction pH is 10.5, the reaction time is 60 h, and the aging time is 8 h; the primary sintering temperature is 800°C, the sintering time is 18 h, and the concentration of oxygen is 70%; the Me source consists in calcium fluoride and antimony oxide in a molar ratio of 3:2; the coating source consists in strontium oxide and yttrium oxide in a molar ratio of 3:1.

Example 7

The preparation method in this example is essentially the same as that of Example 1, with the difference being that: the content of nickel, cobalt, and manganese in the raw material solution is set to be 8:1:1; the reaction temperature is controlled to 65°C, the reaction pH is 11.5, the reaction time is 144 h, and the aging time is 6 h; the primary sintering temperature is 750°C, the sintering time is 20 h, and the concentration of oxygen is 90%; the Me source consists in tin phosphate and tungsten oxide in a molar ratio of 1:1; the coating source consists in niobium carbonate and molybdenum oxide in a molar ratio of 1:2.

Example 8

The preparation method in this example is essentially the same as that of Example 1, with the difference being that: the content of nickel, cobalt, and manganese in the raw material solution is set to be 8:1:1; the reaction temperature is controlled to 80°C, the reaction pH is 12, the reaction time is 168 h, and the aging time is 10 h; the primary sintering temperature is 750°C, the sintering time is 18 h, and the concentration of oxygen is 90%; the Me source consists in cobalt oxide and silicon sulfate in a molar ratio of 3:2; the coating source consists in calcium carbonate and silicon oxide in a molar ratio of 1:1.

Example 9

The preparation method in this example is essentially the same as that of Example 1, with the difference being that: the content of nickel, cobalt, and manganese in the raw material solution is set to be 90:05:05; the reaction temperature is controlled to 70°C, the reaction pH is 10.5, the reaction time is 144 h, and the aging time is 12 h; the primary sintering temperature is 700°C, the sintering time is 24 h, and the concentration of oxygen is 95%; the Me source consists in boric acid, tungsten oxide, and lithium sulfide in a molar ratio of 1:2:1; the coating source consists in tin oxide, phosphoric acid, and tungsten oxide in a molar ratio of 1:2:2.

Example 10

The preparation method in this example is essentially the same as that of Example 1, with the difference being that: the content of nickel, cobalt, and manganese in the raw material solution is set to be 523; the reaction temperature is controlled to 65°C, the reaction pH is 11.5, the reaction time is 168 h, and the aging time is 12 h; the primary sintering temperature is 700°C, the sintering time is 18 h, and the concentration of oxygen is 95%; the Me source consists in zinc oxide and barium oxide in a molar ratio of 1:2; the coating source consists in cobalt oxide and silicon hydroxide in a molar ratio of 1:3.

Example 11

The preparation method in this example is essentially the same as that of Example 1, with the difference being that: the reaction temperature is controlled to 50°C, the reaction pH is 12, the reaction time is 20 h, and the aging time is 4 h; the primary sintering temperature is 850°C, the sintering time is 15 h; the Me source consists in titanium hydroxide and lanthanum oxide in a molar ratio of 1:3; the coating source consists in boron oxide and tungsten oxide in a molar ratio of 3:2.

Example 12

The preparation method in this example is essentially the same as that of Example 1, with the difference being that: the reaction temperature is controlled to 50°C, the reaction pH is 10.5, the reaction time is 64 h, and the aging time is 8 h; the primary sintering temperature is 1000°C, the sintering time is 24 h; the Me source consists in aluminum hydroxide and cobalt chloride in a molar ratio of 1:1; the coating source consists in zinc carbonate and barium oxide in a molar ratio of 3:1.

Example 13

The preparation method in this example is essentially the same as that of Example 1, with the difference being that: the content of nickel, cobalt, and manganese in the raw material solution is set to be 5:2:3; the reaction temperature is controlled to 65°C, the reaction pH is 11.5, the reaction time is 64 h, and the aging time is 12 h; the primary sintering temperature is 750°C, the sintering time is 24 h; the Me source consists in zinc oxide, yttrium oxide, and bismuth oxide in a molar ratio of 2:2:3; the coating source consists in titanium carbonate and lanthanum oxide in a molar ratio of 1:3.

Example 14

The preparation method in this example is essentially the same as that of Example 1, with the difference being that: the content of nickel, cobalt, and manganese in the raw material solution is set to be 5:2:3; the reaction temperature is controlled to 60°C, the reaction pH is 12, the reaction time is 64 h, and the aging time is 8 h; the primary sintering temperature is 750°C, the sintering time is 8 h; the Me source consists in aluminum oxide and tungsten oxide in a molar ratio of 3:2; the coating source consists in aluminum hydroxide and cobalt oxide in a molar ratio of 3:4.

Example 15

The preparation method in this example is essentially the same as that of Example 1, with the difference being that: the content of nickel, cobalt, and manganese in the raw material solution is set to be 6:2:2; the reaction temperature is controlled to 30°C, the reaction pH is 11, the reaction time is 64 h, and the aging time is 24 h; the primary sintering temperature is 850°C, the sintering time is 12 h, and the concentration of oxygen is 80%; no Me source is added; the coating source consists in zinc oxide, yttrium oxide, and boric acid in a molar ratio of 3:2:1.

Example 16

The preparation method in this example is essentially the same as that of Example 1, with the difference being that: the content of nickel, cobalt, and manganese in the raw material solution is set to be 6:2:2; the reaction temperature is controlled to 45°C, the reaction pH is 11.5, the reaction time is 48 h, and the aging time is 4 h; the primary sintering temperature is 800°C, the sintering time is 18 h, and the concentration of oxygen is 10%; the Me source consists in titanium hydroxide and silicon nitride in a molar ratio of 1:2; the coating source consists in aluminum hydroxide and tungsten oxide in a molar ratio of 3:2.

Example 17

The preparation method in this example is essentially the same as that of Example 1, with the difference being that: the content of nickel, cobalt, and manganese in the raw material solution is set to be 8:1:1; the reaction temperature is controlled to 50°C, the reaction pH is 11.5, the reaction time is 124 h, and the aging time is 6 h; the primary sintering temperature is 780°C, the sintering time is 24 h, and the concentration of oxygen is 95%; the Me source consists in tin oxide and lithium phosphate in a molar ratio of 1:3; the coating source consists in antimony oxide and molybdenum oxide in a molar ratio of 3:2.

Example 18

The preparation method in this example is essentially the same as that of Example 1, with the difference being that: the content of nickel, cobalt, and manganese in the raw material solution is set to be 8:1:1; the reaction temperature is controlled to 70°C, the reaction pH is 11, the reaction time is 200 h, and the aging time is 20 h; the primary sintering temperature is 750°C, the sintering time is 20 h, and the concentration of oxygen is 90%; the Me source consists in cobalt oxide and zinc oxide in a molar ratio of 1:1; the coating source consists in titanium hydroxide and silicon oxide in a molar ratio of 1:2.

Example 19

The preparation method in this example is essentially the same as that of Example 1, with the difference being that: the content of nickel, cobalt, and manganese in the raw material solution is 90:05:05; the reaction temperature is controlled to 70°C, the reaction pH is 11.5, the reaction time is 124h, and the aging time is 16 h; the primary sintering temperature is 700°C, the sintering time is 20 h, and the concentration of oxygen is 95%; the Me source consists in chromium oxide, lanthanum oxide, and lithium nitride in a molar ratio of 1:2:1; the coating source consists in tin oxide and phosphorus oxide in a molar ratio of 3:2.

Example 20

The preparation method in this example is essentially the same as that of Example 1, with the difference being that: the content of nickel, cobalt, and manganese in the raw material solution is set to be 523; the reaction temperature is controlled to 65°C, the reaction pH is 10.5, the reaction time is 144 h, and the aging time is 8 h; the primary sintering temperature is 700°C, the sintering time is 18 h, and the concentration of oxygen is 95%; the Me source consists in tungsten oxide, boric acid, and aluminum oxide in a molar ratio of 1:2; the coating source consists in cobalt carbonate and zinc oxide in a molar ratio of 2:1.

Example 21

The preparation method in this example is essentially the same as that of Example 5, with the difference being that: the reaction temperature is controlled to 60°C, the reaction pH is 11, the reaction time is 120 h, and the aging time is 12 h; the primary sintering temperature is 850°C, the sintering time is 24 h, and the concentration of oxygen is 80%; the Me source consists in calcium oxide and silicon oxide in a molar ratio of 1:3; the coating source consists in chromium hydroxide and lanthanum oxide in a molar ratio of 1:4.

Example 22

The preparation method in this example is essentially the same as that of Example 7, with the difference being that: the reaction temperature is controlled to 55°C, the reaction pH is 10.5, the reaction time is 120 h, and the aging time is 6 h; the primary sintering temperature is 720°C, the sintering time is 18 h, and the concentration of oxygen is 99%; the Me source is magnesium phosphate; the coating source consists in tungsten oxide, boric acid, and aluminum oxide in a molar ratio of 1:2:3.

Example 23

The preparation method in this example is essentially the same as that of Example 8, with the difference being that: the reaction temperature is controlled to 60°C, the reaction pH is 11.5, the reaction time is 180 h, and the aging time is 12 h; the primary sintering temperature is 700°C, the sintering time is 24 h, and the concentration of oxygen is 60%; the Me source consists in titanium oxide, molybdenum oxide, and lithium fluoride in a molar ratio of 1:2:1; the coating source consists in calcium carbonate and silicon oxide in a molar ratio of 3:2.

Comparative Example 1

The preparation method in this example is essentially the same as that of Example 1, with the difference being that: the reaction temperature is controlled to 65°C, the reaction pH is 12, the reaction time is 64h, and the aging time is 6 h; the primary sintering temperature is 1000°C, and the sintering time is 12 h; the Me source consists in zirconium carbonate and tungsten oxide in a molar ratio of 1:1; the coating source is magnesium phosphate.

Comparative Example 2

The preparation method in this example is essentially the same as that of Example 3, with the difference being that: the reaction temperature is controlled to 65°C, the reaction pH is 10, the reaction time is 120 h, and the aging time is 10 h; the primary sintering temperature is 600°C, and the sintering time is 28 h; the Me source consists in chromium oxide and lanthanum oxide in a molar ratio of 1:1; the coating source consists in titanium oxide and molybdenum oxide in a molar ratio of 1:1.

Comparative Example 3

The preparation method in this example is essentially the same as that of Example 9, with the difference being that: the reaction temperature is controlled to 40°C, the reaction pH is 9.5, the reaction time is 120 h, and the aging time is 15 h; the primary sintering temperature is 600°C, the sintering time is 48 h, and the concentration of oxygen is 60%; the Me source consists in tungsten oxide, boric acid, and aluminum hydroxide in a molar ratio of 1:2:1; the coating source consists in zirconium hydroxide and tungsten oxide in a molar ratio of 1:2.

Parameters and systems of the positive electrode active materials prepared in Examples 1-23 and Comparative Examples 1-3 are shown in Table 1 and Table 1.1. In Table 1, the column of composition indicates the proportional relationship of a, b, and c of $Li_\theta(Ni_aCo_bMn_c)_{1-x}M_xO_yG_z$, for example, 111 denotes 1:1:1, 523 denotes 5:2:3, and 9005 denotes 9:0.5:0.5.

Test of electrochemical performance

The positive electrode active materials of Examples 1-23 and Comparative Examples 1-3 are uniformly mixed with a conductive agent SP and a binder PVDF at a ratio of 90:5:5 and NMP is added as a solvent. A full stirring is performed to make the slurry disperse uniformly. The positive electrode slurry is uniformly coated onto both sides of the current collector aluminum foil, followed by drying at 120°C, cold pressing, slitting and cutting, thereby obtaining the positive electrode plate.

Graphite, a thickener CMC, a binder SBR, a conductive agent SP, and a binder PVDF are uniformly mixed at a ratio of 97:1:1:1, then deionized water is added as a solvent, and a full stirring is performed to make the slurry disperse uniformly. The negative electrode slurry is uniformly coated onto both sides of the current collector copper foil, followed by drying at 120°C, cold pressing, slitting, and cutting, thereby obtaining the negative electrode plate.

The positive electrode plate, negative electrode plate, and separator (polypropylene film with a thickness of $12\mu m$) are wound into a bare cell. The bare cell is put into an aluminum laminate film, followed by baking, injection with electrolyte (EC/EMC=3/7, 1M lithium hexafluorophosphate), then formation, sealing, capacity grading and other process, obtaining 3Ah pouch battery. The following performance tests are conducted on the pouch battery, with the test results shown in Table 2.

(1) Capacity per gram: the battery is charged at 0.33C constant current up to 4.2V at room temperature, then charged at 4.2V constant voltage until the current is less than 0.05C. After resting for 5 min, the battery is discharged at 0.33C current to 2.8V to obtain an initial discharge capacity per gram.

(2) Rate capability: the battery is charged at 1C constant current up to 4.2V at room temperature, and charged at 4.2V constant voltage until the current is less than 0.05C. After resting for 5 min, the battery is discharged at 4C current to 2.8V to obtain the 4C discharge capacity. The 4C rate = 4C discharge capacity / 1C discharge capacity $\times$ 100%.

(3) Test of cycle performance: the battery is repeatedly subjected to cyclic charge and discharge at 1C current at 45°C, with the charge and discharge cut-off voltages ranging from 2.8V to 4.2V. Capacity retention rate of cycle 900 = capacity of cycle 900 / capacity of initial cycle $\times$ 100%.

(4) Gas storage and production test: the battery is charged at 1C constant current up to 4.2V, and then is charged at 4.2V constant voltage until the current is less than 0.05C. The fullycharged battery is placed in an 80°C oven and its volume is tested using the drainage method every other day; and a full charge at 1C is performed every 7 days.

(5) Test of cyclic gas production: the battery is discharged to 2.8V after 900 cycles, and then placed in the water for measuring its volume by the drainage method. The principle of volume testing using the drainage method: the battery is fully immersed in water in a beaker, and the beaker is placed over an electronic scale. The change in the reading of the electronic scale before and after placing the battery in the baker is equal to $F_{buoyancy}$, and the battery volume V can be calculated according to the Archimedes principle $F_{buoyancy} = \rho gV$.

Table 1

| Number | Composition | $D_V50$ ($\mu m$) | $\alpha$ line/$\mu m^2$ | $\beta$ $\mu m/\mu m^2$ | $\beta/\alpha$ | R/$\beta$ (%) | $\gamma$ pieces/$\mu m^2$ | Oil absorption value (mL/g) |
|---|---|---|---|---|---|---|---|---|
| Example 1 | 111 | 4.1 | 21.2 | 6.1 | 0.29 | 75 | 2.1 | 28 |
| Example 2 | 111 | 3.2 | 20.2 | 6.3 | 0.31 | 68 | 1.9 | 29 |
| Example 3 | 523 | 4.3 | 23.2 | 4.8 | 0.21 | 65 | 0.3 | 10 |
| Example 4 | 523 | 3.2 | 23.7 | 4.6 | 0.19 | 62 | 0.4 | 30 |
| Example 5 | 622 | 4.1 | 23.8 | 6.4 | 0.27 | 78 | 1.8 | 25 |
| Example 6 | 622 | 3.1 | 12.3 | 3.2 | 0.26 | 82 | 0.4 | 40 |
| Example 7 | 811 | 10.0 | 15 | 5.5 | 0.37 | 73 | 0.5 | 1 |
| Example 8 | 811 | 13.3 | 14 | 5.3 | 0.38 | 75 | 5.5 | 1.1 |
| Example 9 | 9005 | 10.4 | 22 | 5.2 | 0.24 | 71 | 12.3 | 1.2 |
| Example 10 | 9005 | 13.3 | 18 | 5.8 | 0.32 | 70 | 8.2 | 1.1 |

(continued)

| Number | Composition | $D_V50$ (μm) | α line/μm² | β μm/μm² | β/α | R/β (%) | γ pieces/μm² | Oil absorption value (mL/g) |
|---|---|---|---|---|---|---|---|---|
| Example 11 | 111 | 2 | 15.3 | 6.4 | 0.36 | 70 | 2.3 | 50 |
| Example 12 | 111 | 3.3 | 1 | 0.15 | 0.15 | 69 | 2.2 | 27 |
| Example 13 | 523 | 4.2 | 22.2 | 5.8 | 0.26 | 60 | 0.9 | 34 |
| Example 14 | 523 | 3.4 | 50 | 20 | 0.40 | 68 | 0.5 | 60 |
| Example 15 | 622 | 4.7 | 29.8 | 7.4 | 0.25 | 88 | 30 | 80 |
| Example 16 | 622 | 3.5 | 15.3 | 4.2 | 0.27 | 78 | 0.3 | 50 |
| Example 17 | 811 | 10.5 | 13.2 | 7.5 | 0.37 | 76 | 4.3 | 1.3 |
| Example 18 | 811 | 16 | 14.8 | 6.4 | 0.33 | 78 | 6.3 | 1.9 |
| Example 19 | 9005 | 10.6 | 22.2 | 8.2 | 0.37 | 76 | 9.3 | 1.9 |
| Example 20 | 9005 | 13.6 | 18.8 | 6.8 | 0.36 | 73 | 9.2 | 1.6 |
| Example 21 | 622 | 4.1 | 22 | 5.1 | 0.23 | 40 | 1.6 | 24 |
| Example 22 | 811 | 10.2 | 16 | 5.5 | 0.34 | 78 | 0.1 | 1 |
| Example 23 | 811 | 13.3 | 15 | 5.5 | 0.37 | 73 | 0.3 | 5 |
| Comparative Example1 | 111 | 4.4 | 53 | 22 | 0.42 | 60 | 2.0 | 25 |
| Comparative Example2 | 523 | 4.5 | 0.9 | 0.1 | 0.11 | 64 | 0.3 | 18 |
| Comparative Example3 | 9005 | 10 | 0.8 | 0.11 | 0.14 | 70 | 0.1 | 0.1 |

Table 1.1 (Elements M and G in this table respectively refer to the elements M and G in the chemical formula of the positive electrode active material $Li_\theta(Ni_aCo_bMn_c)_{1-x}M_xO_yG_z$. The content of element M denotes the molar percentage of the content of element M in the positive electrode active material relative to the total content of transition metal elements.)

| Number | Dv10 (μm) | Dv90 (μm) | Specific surface area | Type and content of element M | Type of element G | Coating element | Total content of the coating element per unit surface area mg/m² | Content of residual lithium mg/m² |
|---|---|---|---|---|---|---|---|---|
| Example 1 | 2.7 | 5.3 | 1.1 | 2% Nb/Mo | F | Zr/W/Ti | 10 | 1.01 |
| Example 2 | 2.2 | 4.2 | 1.5 | 5% Sn/Cr | S | Mg/Ba | 13 | 1.2 |
| Example 3 | 2.5 | 5.5 | 1.3 | 5% Sr/Y | Cl | Ti/Bi | 8 | 0.1 |
| Example 4 | 2.1 | 4.3 | 1.7 | 4% La/W | / | Sn/Cr | 10 | 0.9 |
| Example 5 | 2.7 | 5.4 | 1.1 | 8% Nb/Mo | / | Sr/Y | 10 | 1.1 |
| Example 6 | 1.8 | 3.6 | 2.1 | 7% Ca/Sb | F | La/W | 5 | 2.3 |
| Example 7 | 7.3 | 13.7 | 0.38 | 8% Sn/P/W | / | Nb/Mo | 2 | 3.1 |
| Example 8 | 10.5 | 19.2 | 0.44 | 5% Co/Si | S | Ca/Si | 3 | 3.3 |

(continued)

| Number | Dv10 (μm) | Dv90 (μm) | Specific surface area | Type and content of element M | Type of element G | Coating element | Total content of the coating element per unit surface area mg/m$^2$ | Content of residual lithium mg/m$^2$ |
|---|---|---|---|---|---|---|---|---|
| Example 9 | 8.1 | 14.4 | 0.46 | 2% B/W | S | Sn/P/W | 10 | 2.65 |
| Example 10 | 10.1 | 18.7 | 0.42 | 3% Zn/Ba | / | Co/Si | 16 | 2.93 |
| Example 11 | 1 | 3 | 2.5 | 4% Ti/La | / | B/W | 13 | 2.51 |
| Example 12 | 2.4 | 4.4 | 1.9 | 5% Al/Co | Cl | Zn/Ba | 15 | 2.2 |
| Example 13 | 2.9 | 5.8 | 1.9 | 6% Zn/Y/Bi | / | Ti/La | 10 | 2.4 |
| Example 14 | 2.3 | 4.5 | 1.5 | 10% Al/W | / | Al/Co | 0.1 | 8 |
| Example 15 | 2.5 | 5.2 | 1.4 | / | / | Zn/Y/B | 10 | 1.5 |
| Example 16 | 1.7 | 3.5 | 2.3 | 9% Ti/Si | N | Al/W | 16 | 5.3 |
| Example 17 | 6.3 | 12.7 | 0.39 | 4% Sn/P | / | Sb/Mo | 20 | 2.1 |
| Example 18 | 13 | 20 | 0.2 | 5% Co/Zn | / | Ti/Si | 17 | 9.3 |
| Example 19 | 9.1 | 12.4 | 0.56 | 6% Cr/La | N | Sn/P | 13 | 5.65 |
| Example 20 | 10.5 | 16.7 | 0.82 | 5% W/B/Al | / | Co/Zn | 12 | 4.73 |
| Example 21 | 2.2 | 5.4 | 1.7 | 4% Ca/Si | / | Cr/La | 16 | 2.0 |
| Example 22 | 7.3 | 14.6 | 0.55 | 5% Mg/P | / | W/B/Al | 13 | 4.3 |
| Example 23 | 10.5 | 18.9 | 0.33 | 4% Ti/Mo | F | Ca/Si | 11 | 4.3 |
| Comparative Example 1 | 2.7 | 4.2 | 1.9 | 3% Zr/W | / | Mg/P | 11 | 1.5 |
| Comparative Example 2 | 2.5 | 5.8 | 0.6 | 4% Cr/La | / | Ti/Mo | 17 | 1.9 |
| Comparative Example 3 | 7.8 | 13.9 | 0.5 | 7% W/B/Al | / | Zr/W | 11 | 2.88 |

Table 2

| Example | Capacity per gram (1/3C, mAh/g) | Discharge at 4C rate (%) | Capacity retention rate of cycle 900, 45°C (%) | Volume expansion ratio of cycle 900, 45°C (%) | Gas storage and production 80°C (%, 18d) |
|---|---|---|---|---|---|
| Example 1 | 155 | 99 | 99 | 1 | 10 |
| Example 2 | 157 | 99 | 99 | 1 | 9 |
| Example 3 | 167 | 98 | 97 | 3 | 11 |
| Example 4 | 165 | 97 | 97 | 3 | 14 |
| Example 5 | 173 | 96 | 95 | 4 | 16 |

(continued)

| Example | Capacity per gram (1/3C, mAh/g) | Discharge at 4C rate (%) | Capacity retention rate of cycle 900, 45°C (%) | Volume expansion ratio of cycle 900, 45°C (%) | Gas storage and production 80°C (%, 18d) |
|---|---|---|---|---|---|
| Example 6 | 175 | 95 | 95 | 5 | 17 |
| Example 7 | 200 | 90 | 88 | 6 | 19 |
| Example 8 | 200 | 89 | 87 | 7 | 23 |
| Example 9 | 211 | 89 | 84 | 10 | 24 |
| Example 10 | 210 | 90 | 83 | 12 | 25 |
| Example 11 | 160 | 93 | 97 | 3 | 15 |
| Example 12 | 150 | 93 | 95 | 4 | 18 |
| Example 13 | 165 | 97 | 96 | 5 | 14 |
| Example 14 | 160 | 92 | 90 | 9 | 20 |
| Example 15 | 175 | 99 | 93 | 8 | 19 |
| Example 16 | 170 | 97 | 92 | 9 | 15 |
| Example 17 | 197 | 88 | 92 | 5 | 15 |
| Example 18 | 201 | 85 | 83 | 5 | 18 |
| Example 19 | 210 | 90 | 85 | 9 | 23 |
| Example 20 | 211 | 91 | 84 | 13 | 24 |
| Example 21 | 173 | 96 | 93 | 6 | 20 |
| Example 22 | 198 | 87 | 85 | 10 | 26 |
| Example 23 | 200 | 89 | 82 | 15 | 30 |
| Comparative Example 1 | 150 | 81 | 90 | 5 | 14 |
| Comparative Example 2 | 165 | 84 | 81 | 7 | 16 |
| Comparative Example 3 | 209 | 86 | 77 | 17 | 35 |

As shown in Tables 1 and 2, compared with Comparative Example 1, Example 1 exhibits superior battery cycling performance, rate capability, and gas production performance, which indicates that when the value of $\beta/\alpha$ is $\leq 0.4$, the arrangement of primary particles within the secondary particle is more ordered, with suitable contact points between the electrolyte and grain boundaries, thereby being less prone to intergranular cracking after cycling.

Compared with Comparative Example 2, Example 3 exhibits significantly superior rate, cycling, and gas production performance, which indicates that when the value of $\beta/\alpha$ is >0.15, the arrangement of primary particles within the secondary particle is more ordered, thereby being less prone to intergranular cracking after cycling.

Compared to Comparative Example 3, Example 9 exhibits significantly superior rate, cycling, and gas production performance, which indicates that when the value of $\beta/\alpha$ is >0.15, the arrangement of primary particles within the secondary particle is more ordered, thereby being less prone to intergranular cracking after cycling.

In summary, the positive electrode active material of this embodiment includes the secondary particle composed of primary particles. By regulating the number of grain boundaries, crystal plane orientation, and cross-section pore structure, length ($\beta$) of grain boundary per unit cross-sectional area and number ($\alpha$) of grain boundary per unit cross-sectional area satisfy $0.15 \leq \beta/\alpha \leq 0.4$, thereby enhancing stress release ability of material structure, improving the material's oxygen stability, releasing polycrystalline particle cracking after high compact and long-term cycling, and reducing oxygen loss. Accordingly, the positive electrode active material in this embodiment exhibits excellent cycle life, low gas production performance, and favorable dynamic performance.

The above provides a detailed introduction to the positive electrode active material, secondary battery, and electric device disclosed herein. Specific examples have been used to illustrate the principles and implementation methods of the present application. The above embodiments are provided solely to aid in understanding the methods and core concepts of this application. At the same time, for those skilled in the art, modifications to specific implementation methods and application scopes may be made based on the principles of this application. In summary, the content of this specification should not be construed as limiting the scope of this application.

**Claims**

1. A positive electrode active material, comprising a secondary particle agglomerated by primary particles, wherein in an SEM image of cross-section of the secondary particle, number of grain boundaries per unit cross-sectional area is $\alpha$ line per $\mu m^2$, a length of grain boundaries per unit cross-sectional area is $\beta$ $\mu m/\mu m^2$, and the secondary particle satisfies:

$$0.15 \le \beta/\alpha \le 0.4.$$

2. The positive electrode active material according to claim 1, wherein in the SEM image of cross-section of the secondary particle, number of pores per unit cross-sectional area is $\gamma$ piece per $\mu m^2$, the secondary particle satisfying: $\gamma \le 30$.

3. The positive electrode active material according to claim 1, wherein in the SEM image of cross-section of the secondary particle, a cross-sectional pattern of the primary particles has a longest edge and a side edge that is not intersected with the longest edge; wherein a sum of lengths of the longest edge and the side edge per unit cross-sectional area is R $\mu m/\mu m^2$, satisfying: $R/\beta \ge 60\%$.

4. The positive electrode active material according to claim 1, wherein the positive electrode active material further satisfies: an oil absorption value ranges from 1 mL/g to 80 mL/g.

5. The positive electrode active material according to claim 1, wherein the positive electrode active material further satisfies that: a Dv10 of the positive electrode active material is from 1 $\mu m$ to 13 $\mu m$, a Dv50 of the positive electrode active material is from 2 $\mu m$ to 16 $\mu m$, and a Dv90 of the positive electrode active material is from 3 $\mu m$ to 20 $\mu m$; wherein the Dv10 refers to a particle size corresponding to a cumulative volume percentage of the positive electrode active material reaching 10%; Dv50 refers to a particle size corresponding to the cumulative volume percentage of the positive electrode active material reaching 50%; Dv90 refers to a particle size corresponding to the cumulative volume percentage of the positive electrode active material reaching 90%.

6. The positive electrode active material according to claim 1, wherein a specific surface area of the positive electrode active material is from 0.2 $m^2/g$ to 2.5 $m^2/g$.

7. The positive electrode active material according to claim 1, wherein the secondary particle further satisfies at least one of the following features:

    a)

$$1 \le \alpha \le 50;$$

    or
    b)

$$0.15 \le \beta \le 20.$$

8. The positive electrode active material according to claim 1, wherein the positive electrode active material comprises $Li_\theta(Ni_aCo_bMn_c)_{1-x}M_xO_yG_z$; wherein $0.95 \le \theta \le 1.1$, $0.3 \le a \le 0.9$, $0 \le b \le 0.15$, $0 \le c \le 0.5$, $0 \le x \le 0.1$, $1 \le y \le 2$, $0 \le z \le 1$, $y + z = 2$; M is selected from at least one of Al, Mg, B, Ca, Zn, Sb, W, Bi, Cr, Sr, Y, W, Zr, Ti, La, Nb, Mo, or V; G is selected from at least one of F, S, Cl, or N.

9. The positive electrode active material according to claim 8, wherein the positive electrode active material comprises a coating element disposed on a surface of the secondary particle and/or the primary particles; and the coating element is selected from at least one of Al, Mg, B, Ba, Co, Si, Sn, P, Ca, Zn, Sb, W, Bi, Cr, Sr, Y, W, Zr, Ti, La, Nb, or Mo.

**10.** The positive electrode active material according to claim 9, wherein a total content of the coating element per unit surface area in the positive electrode active material is from 0.1 mg/m$^2$ to 20 mg/m$^2$.

**11.** The positive electrode active material according to claim 8, wherein a content of residual lithium per unit surface area in the positive electrode active material is from 0.1 mg/m$^2$ to 8 mg/m$^2$.

**12.** The positive electrode active material according to claim 1, wherein the secondary particle has pores, the pores of the secondary particle are formed by stacking the primary particles, and a pore diameter of the pores is D μm, which satisfies: $0.01 \leq D \leq 4$.

**13.** The positive electrode active material according to claim 3, wherein $R/\beta \leq 90\%$.

**14.** A secondary battery comprising a positive electrode current collector and a positive electrode plate disposed on the positive electrode current collector, wherein the positive electrode plate comprises the positive electrode active material according to any one of claims 1 to 13.

**15.** An electric device comprising the secondary battery according to claim 14.

FIG. 1

## INTERNATIONAL SEARCH REPORT

| International application No. |
| --- |
| **PCT/CN2023/140490** |

| A. | CLASSIFICATION OF SUBJECT MATTER |
| --- | --- |

H01M4/36(2006.01)i; H01M4/505(2010.01)i; H01M4/525(2010.01)i; H01M10/30(2006.01)i

According to International Patent Classification (IPC) or to both national classification and IPC

| B. | FIELDS SEARCHED |
| --- | --- |

Minimum documentation searched (classification system followed by classification symbols)

   IPC:H01M

Documentation searched other than minimum documentation to the extent that such documents are included in the fields searched

Electronic data base consulted during the international search (name of data base and, where practicable, search terms used)

   CJFD, CNTXT, DWPI, ENTXTC, VEN, WPABS, CNKI, ISI WEB OF SCIENCE: 包, 包覆, 包裹, 多晶, 晶体, 高镍, 二次颗粒, 二次粒子, 核壳, 芯, 截面, 晶界, 晶界长度, 晶界数量, 孔, 吸油值, sem, 比表面积, 密度, 密实度, 开裂, 失氧, particle, grain, boundary, crystal, secondary particle, gas generation

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117096317 A (SUNWODA POWER TECHNOLOGY CO., LTD.) 21 November 2023 (2023-11-21)<br>   description, paragraphs 32-91 | 1-15 |
| X | CN 115084508 A (SUNWODA ELECTRIC VEHICLE BATTERY CO., LTD.) 20 September 2022 (2022-09-20)<br>   description, paragraphs 32-71, and figure 1 | 1-15 |
| X | CN 112436115 A (CONTEMPORARY AMPEREX TECHNOLOGY CO., LTD.) 02 March 2021 (2021-03-02)<br>   description, paragraphs 17-66 | 1-15 |
| X | CN 115911358 A (SUNWODA ELECTRIC VEHICLE BATTERY CO., LTD.) 04 April 2023 (2023-04-04)<br>   description, paragraphs 43-85, and figure 1 | 1-15 |
| X | WO 2023138438 A1 (HUAWEI TECHNOLOGIES CO., LTD.) 27 July 2023 (2023-07-27)<br>   description, page 5, paragraph 9-page 13, paragraph 2 | 1-15 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 May 2024** | **15 May 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/140490** |

## C. DOCUMENTS CONSIDERED TO BE RELEVANT

| Category* | Citation of document, with indication, where appropriate, of the relevant passages | Relevant to claim No. |
| --- | --- | --- |
| X | CN 111092197 A (SAMSUNG ELECTRONICS CO., LTD. et al.) 01 May 2020 (2020-05-01) description, paragraphs 40-168 | 1-15 |
| A | EP 3663265 A2 (ECOPRO BM CO., LTD.) 10 June 2020 (2020-06-10) entire description | 1-15 |
| A | CN 111785960 A (CENTRAL SOUTH UNIVERSITY) 16 October 2020 (2020-10-16) entire description | 1-15 |
| A | KR 20190026571 A (SAMSUNG ELECTRONICS CO., LTD. et al.) 13 March 2019 (2019-03-13) entire description | 1-15 |
| A | CN 113707876 A (YINGDE KEHENG NEW ENERGY TECHNOLOGY CO., LTD.) 26 November 2021 (2021-11-26) entire description | 1-15 |

Form PCT/ISA/210 (second sheet) (July 2022)

## INTERNATIONAL SEARCH REPORT
### Information on patent family members

International application No.

**PCT/CN2023/140490**

| Patent document cited in search report | | | Publication date (day/month/year) | Patent family member(s) | | | Publication date (day/month/year) |
|---|---|---|---|---|---|---|---|
| CN | 117096317 | A | 21 November 2023 | None | | | |
| CN | 115084508 | A | 20 September 2022 | None | | | |
| CN | 112436115 | A | 02 March 2021 | CN | 112436115 | B | 28 December 2021 |
| CN | 115911358 | A | 04 April 2023 | None | | | |
| WO | 2023138438 | A1 | 27 July 2023 | CN | 116525806 | A | 01 August 2023 |
| CN | 111092197 | A | 01 May 2020 | EP | 3693341 | A1 | 12 August 2020 |
| | | | | JP | 2020068208 | A | 30 April 2020 |
| | | | | KR | 20200046485 | A | 07 May 2020 |
| | | | | US | 2020136132 | A1 | 30 April 2020 |
| | | | | US | 11909032 | B2 | 20 February 2024 |
| | | | | US | 2024097117 | A1 | 21 March 2024 |
| EP | 3663265 | A2 | 10 June 2020 | KR | 20200029961 | A | 19 March 2020 |
| | | | | EP | 3663265 | A3 | 12 August 2020 |
| | | | | JP | 2020077611 | A | 21 May 2020 |
| | | | | JP | 7198736 | B2 | 04 January 2023 |
| | | | | JP | 7198736 | B6 | 23 January 2023 |
| | | | | JP | 2022009746 | A | 14 January 2022 |
| | | | | JP | 7254875 | B2 | 10 April 2023 |
| | | | | KR | 20210038501 | A | 07 April 2021 |
| | | | | KR | 102511721 | B1 | 20 March 2023 |
| CN | 111785960 | A | 16 October 2020 | CN | 111785960 | B | 20 November 2020 |
| KR | 20190026571 | A | 13 March 2019 | KR | 102650968 | B1 | 26 March 2024 |
| CN | 113707876 | A | 26 November 2021 | CN | 113707876 | B | 08 February 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311196126